Europäisches Patentamt

European Patent Office

Office européen des brevets

(11) Publication number: **0 473 141 A2**

# EUROPEAN PATENT APPLICATION

(21) Application number: **91114461.6**

(22) Date of filing: **28.08.91**

(51) Int. Cl.5: **H04N 1/00**

(30) Priority: **31.08.90 JP 231457/90**

(43) Date of publication of application:
**04.03.92 Bulletin 92/10**

(84) Designated Contracting States:
**DE FR GB**

(71) Applicant: **FUJI PHOTO FILM CO., LTD.**
**210 Nakanuma Minami Ashigara-shi**
**Kanagawa(JP)**

(72) Inventor: **Hanyu, Gosuke**
**2-26-30, Nishi-Azabu**
**Minato-Ku, Tokyo(JP)**
Inventor: **Nakauchi, Kenji**
**1-6-18-811, Minami-Machi, Kichijyouji**
**Musashino-Shi, Tokyo(JP)**
Inventor: **Tsuzuki, Masayuki**
**5-16-14-202, Nishi-Tsuruma**
**Yamatato-Shi, Kanagawa(JP)**

(74) Representative: **Patentanwälte Grünecker,**
**Kinkeldey, Stockmair & Partner**
**Maximilianstrasse 58**
**W-8000 München 22(DE)**

(54) **Method for detecting inferior quality of image information.**

(57) The film and the PS plate are read in separately by a scanner to recognize the positional shift therebetween. Based on the quantity of the recognized positional shift, the alignment in position is conducted between the pair of image information. For the alignment in position, the address conversion is applied most preferably as the method. Both the images are compared in such a condition as being aligned in position, and the comparisons are made one by one for fixed regions. The whole image is divided into a plurality of images having a fixed area. Next to this, for each divided region, a judgement is made on whether each divided region is formed of halftoned portion or text. As a result, if a divided portion is determined to be a text, a fixed threshold level for binarizing is set up. When a divided portion is judged as a halftoned portion, a threshold level is set up, what is called dynamically, in accordance with variations of the halftone dot densities. Then, based on the set-up threshold levels, each portion is binarized. After these binarizing operations, all regions of the film divided are respectively compared with the corresponding regions of the PS plate to detect any mismatched portions. It is most preferable to compare the numbers of black (or white) dots since this method agrees with the human's sensation. As a result of the disagreement detection, a judgement is made on whether or not each divided portion disagrees with the corresponding portion more largely than a certain level, if it is so, the region in question is determined as a mismatched one and the error information is set up.

START
開 始

RECOGNIZE POSITIONAL SHIFT

位置ズレ認識 — S1

ALIGNMENT IN POSITION

位置合わせ — S2

DIVIDE IMAGE

画像分割 — S3

網点か? — S4 — HALFTONE?

Yes

No

FIXED THRESHOLD LEVEL

固定スレッシュホールドレベル — S5

DYNAMIC THRESHOLD LEVEL

ダイナミックスレッシュホールドレベル — S6

2 値化 — S7 — BINARIZE

不一致検出 — S8 — DETECT MISMATCHED PORTION

一定量以上? — S9 — Yes

MORE THAN CERTAIN LEVEL?

No

エラー設定 — S10

END 終 了 SET ERROR

Fig.3

2

## BACKGROUND OF THE INVENTION

### 1. Field of the Invention

This invention relates to a method for detecting inferior quality on a reproduced image information, particularly to a method for inspecting a plate, by which information defections on such as printing unsharpness and the like on a PS (pre-sensitized) plate is detected.

### 2. Description of the Prior Art

Recently, there has been being rapidly developed an automatic and high speed system in the newspaper printing art field, as well as in other information providing art fields. More specifically, with reference to how a newspaper reaches sending-out in a brief description, firstly, the newspaper original prepared in the head office is transmitted to each branch factory scattered in the whole country through high speed digital communication lines or the like. At each branch factory, the transmitted newspaper original information is once held in a memory means and at the same time, on the basis of the information, a lithographic type film is prepared. Next to this, an exposure and development is performed contacting or overlapping a row plate with the lithographic type film to form PS plates used for printing plates. The processed PS plates are subjected to a printing press to be pressed. Thus printed newspapers are packed separately for various destinations. These procedures are mostly carried out in an automatic manner by computer control, in some ten minutes.

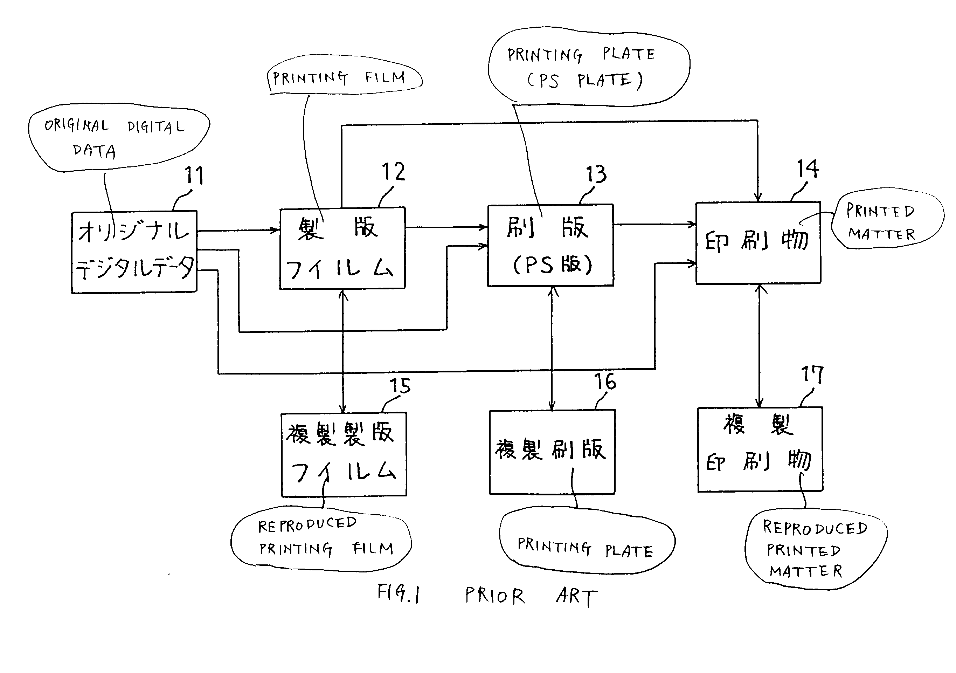

Production of conventional printed matters will be explained with reference to FIG. 1. A printing film 12 is produced from an original digital data 11 which is a concrete printing information, and then a printing plate 13 is produced by exposing and developing the printing film 12. Printed matter 14 is produced by laying a developed printing plate 13 in a printer. There are cases to directly produce the printing plate 13 from the original digital data 11 such as digital copy. Further, there are cases to directly produce the printed matter 14 from the printing film 12 and to respectively reproduce the printing film 12, the printing plate 13 and the printed matter 14 so as to compare with a reproduced printing film 15, a printing plate 16 and a reproduced printed matter 17.

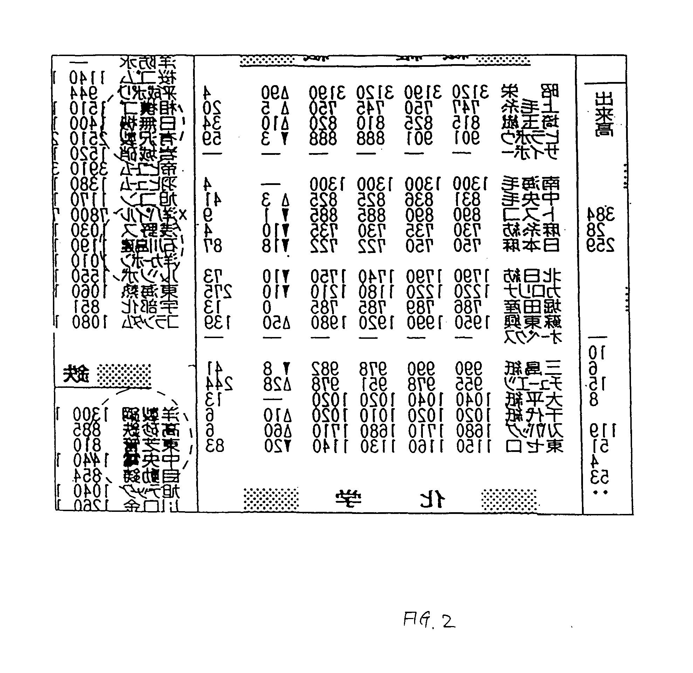

In the conventional newspaper printing steps as described above, the information transmitted from a head office has not been inspected or examined in detail as to whether the information is printed as it should be, and clearly without any unevenness, but has been checked to the most in such a manner that a supervisor stops the printing machine when finding an apparent poor printing. Accordingly, even though the unsharp portions (the portions enclosed with a broken circle) as shown in FIG.2 occurs, the printing is performed as it comes in the existing circumstances. Here, the printing unsharpness occurs, for example, in a case where dust is caught, or an entire contact is not achieved, between the film and and the PS plate when they are adhered.

Further, in the printing field as shown in FIG. 1, there is a possibility to occur inferior reproductions at respective processes. However, there is no means to effectively detect the inferior quality at any processes and to identify the inferior quality and the position at a reference which coincides with a human's eyesight. Since the detection of the inferior quality pattern in the image information reproduction technology such as printed circuit, shadow mash, liquid crystal display or the like is performed by comparing one dot information by one dot information, the detection is precise but the apparatus becomes to large-size and expensive. Further, since the detection is very precise, it does not coincide with the human's eyesight characteristics.

## SUMMARY OF THE INVENTION

This invention has been achieved under view of what is discussed above, and an object of this invention is to provide a method, of inspecting a plate, capable of detecting defects such as printing unsharpness and the like on a PS plate.

Another object of this invention is to provide a method to effectively detect inferior quality, in conformity with the human's eyesight, on image information reproduced due to an original image information comprising characters, line drawings, halftone and so on and to exactly detect halftone portion.

According to one aspect of this invention, for achieving the objects described above, there is provided a method for detecting inferior quality of image information which comprises the steps of respectively dividing an original image information and a reproduced image information formed due to said original image information into a plurality of regions in accordance with a characteristics of human's sensation when said original image information and said reproduced image information are compared each other, performing said comparison for said respective regions and detecting matching or non-matching between said respective regions.

According to another aspect of this invention, there is provided a method for plate inspecting comprising the steps of: reading by means of a reading unit both of an original film and a printing plate which is prepared by performing an exposure and development on the basis of the original film; aligning the film in position to the plate by setting up feature points to recognize a shift between the former image information and the latter; dividing the aforementioned image information into a plurality of regions to distinguish whether each of the divided regions is formed of halftoned image, or characters and line drawings, and when an image is determined to be made of a character and line drawing region, binarizing the image region at a fixed threshold level, while in the case of a halftoned image region, binarizing the image region at threshold levels in accordance with respective densities of halftone dots; and comparing the film with the plate on the above mentioned image information one by one for the divided regions to detect disagreement therebetween.

The nature, principle and utility of the invention will become more apparent from the following detailed description when read in conjunction with the accompanying drawings.

BRIEF DESCRIPTION OF THE DRAWINGS

In the accompanying drawings:

FIG.1 is a block diagram showing a flow to produce printed matters in the printing field;

FIG.2 is a diagram showing the occurrence of printing unsharpness on the newspaper information;

FIG.3 is a flow chart for explaining the principle of the method for detecting inferior quality of image information according to this invention;

FIG.4 is a schematic diagram showing an example of the scanner applied to put the method of this invention into effect;

FIG.5 is a flow chart showing the process procedures to be carried out after scanning a film by the scanner;

FIGs.6A and 6B are diagrams showing the whole image information scanned of the film and the PS plate, respectively;

FIG.6C is a diagram showing the image information in a single cell in FIG.6A;

FIGs.7A and 7B are diagrams showing the light and dark distributions of the character region and the halftone region, respectively;

FIG.8 is a flow chart showing the processing procedures for the image information on the PS plate when Affine transformation is adopted;

FIG.9 is a flow chart showing the processing procedures when the address conversion is adopted;

FIG.10 is a diagram for explaining the address conversion;

FIG.11 is a diagram for explaining the detection in the case where a printing unsharpness occurs in halftone dot region;

FIGs.12A and 12B are diagrams showing examples of the result of detection of printing unsharpness; and

FIGs.13A to 13C are diagrams showing the other method of inspecting a plate.

DESCRIPTION OF THE PREFERRED EMBODIMENTS

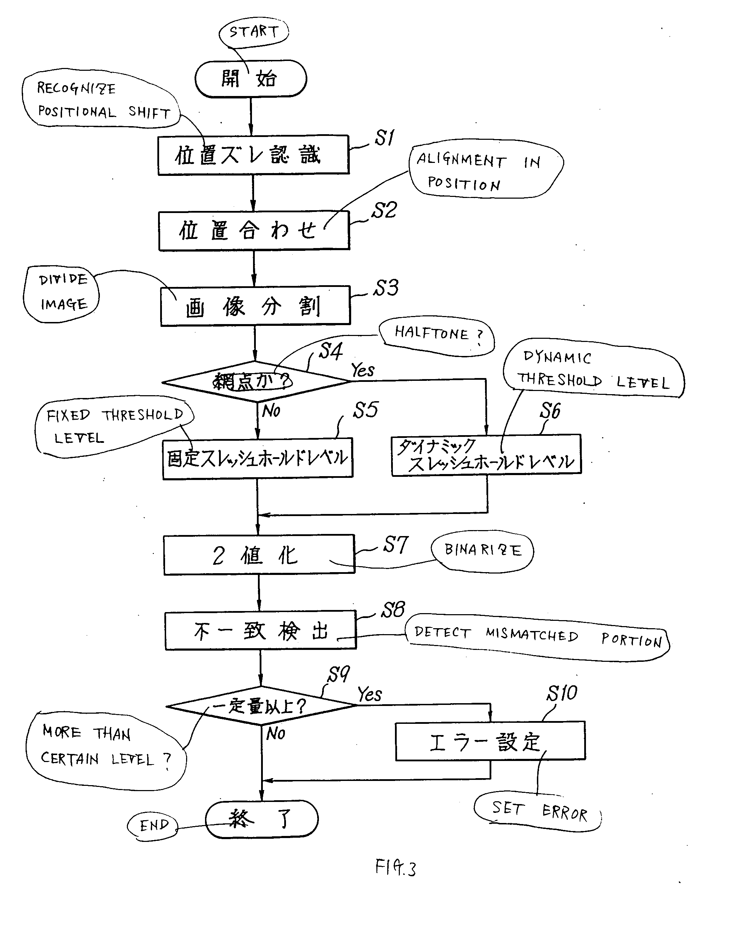

FIG.3 shows a flow chart for explaining the principle of this invention method. The basic procedures will be described hereinafter based on this figure.

At first, a film and a PS plate are read in separately by a scanner to recognize a positional shift therebetween (Step S1) . Based on the quantity of the recognized positional shift, an alignment in position is conducted between the pair of image informations (Step S2) . For the alignment in position, the address conversion is applied most preferably as the method. Both the images are compared in such a condition as being aligned in position, and in this invention, the comparisons are made one by one for fixed regions. More specifically, firstly, the whole image is divided into a plurality of images having a fixed area size (Step S3). Next to this, for each divided region, a judgement is made on whether each divided region is formed of a halftoned portion or a text (characters and line drawings) portion (Step S4). As the result, if a divided portion is determined to be the text portion, a fixed threshold level for binarizing is set up (Step S5). On the other hand, when a divided portion is judged as the halftoned portion, a threshold level is set up, what is called dynamically, in accordance with variations of the halftone densities (Step S6). Then, based on the set up threshold level at the Step S5 or S6, each portion is binarized (Step S7). After these binarizing operations, all regions of the film divided at the Step S3, are respectively compared with the corresponding regions of the PS plate to detect any mismatched portions (Step S8). Here, it is most preferable to compare the numbers of black (or white) dots since this method agrees with the human's sensation. As the result of the disagreement detection, a judgement is made on whether or not each divided portion disagrees with the corresponding portion more largely than a certain level (Step S9), if it is so, the region in question is determined as a mismatched one and the error information is set up (Step S10). The mismatching or disagreement between the film and the PS plate can be automatically detected by the procedures heretofore, according to this invention.

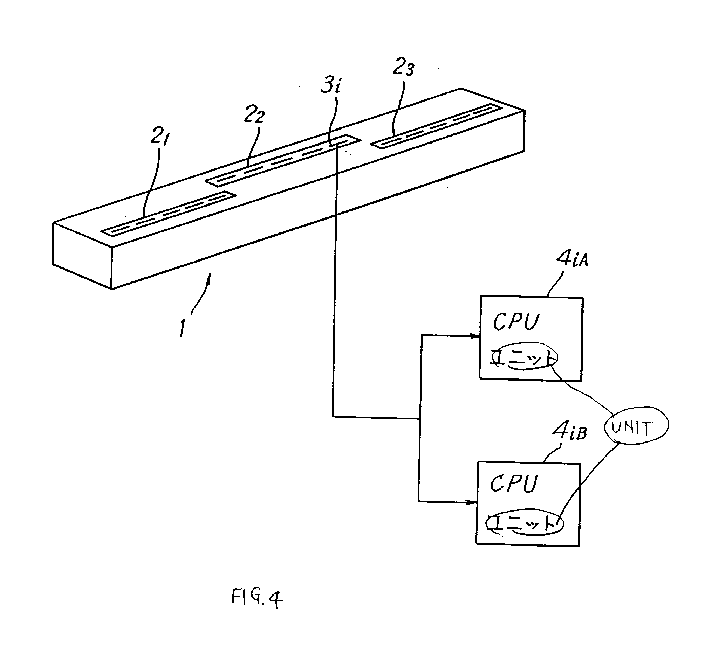

FIG.4 is an overall configuration view of an example of the scanner used in performing the detecting method of this invention. As shown in this figure, a scanner 1 includes three scanner units $2_1$,

$2_2$ and $2_3$, each of which has a five CCDs $3_i$. In other word, there are provided in total fifteen CCDs $3_i$ to read in an image information. Further, each CCD $3_i$ is connected in parallel with a CPU unit $4_{iA}$ as well as with another CPU unit $4_{iB}$. Accordingly, image information read in by each CCD $3_i$ is processed alternately by the CPU unit $4_{iA}$ and the CPU unit $4_{iB}$.

There will be explained, hereinafter, procedures in the comparison between a film and a PS plate by reading in the image information with thus configurated scanner 1.

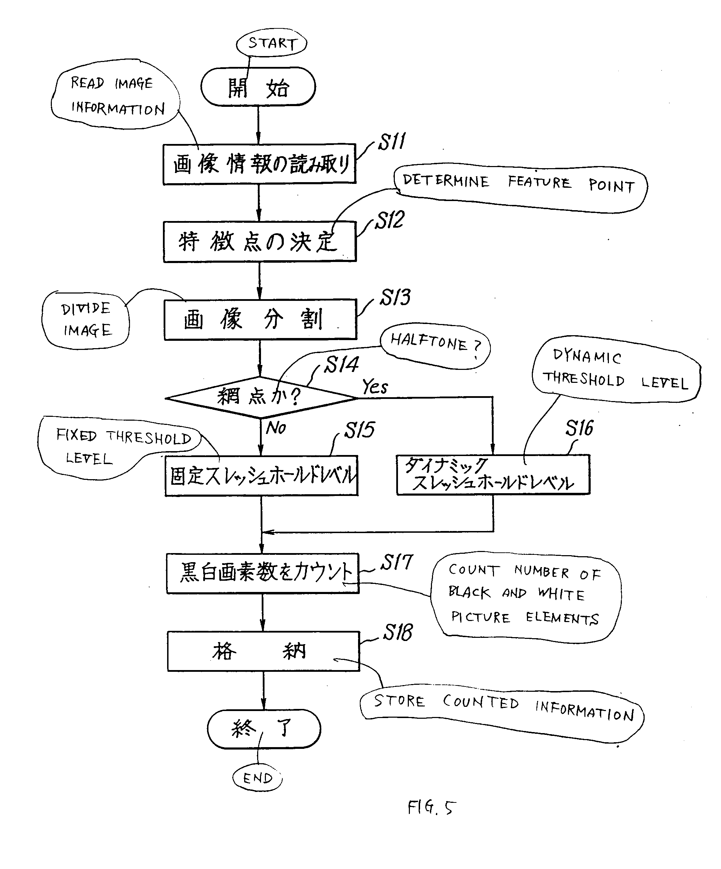

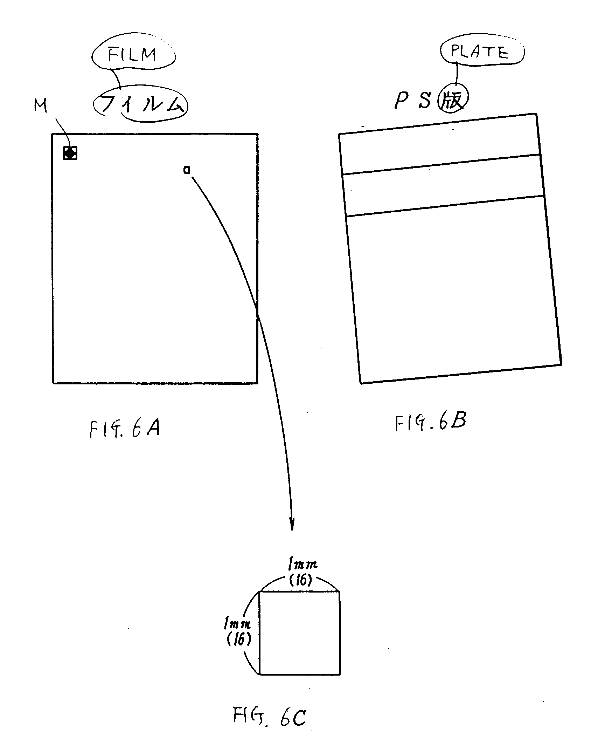

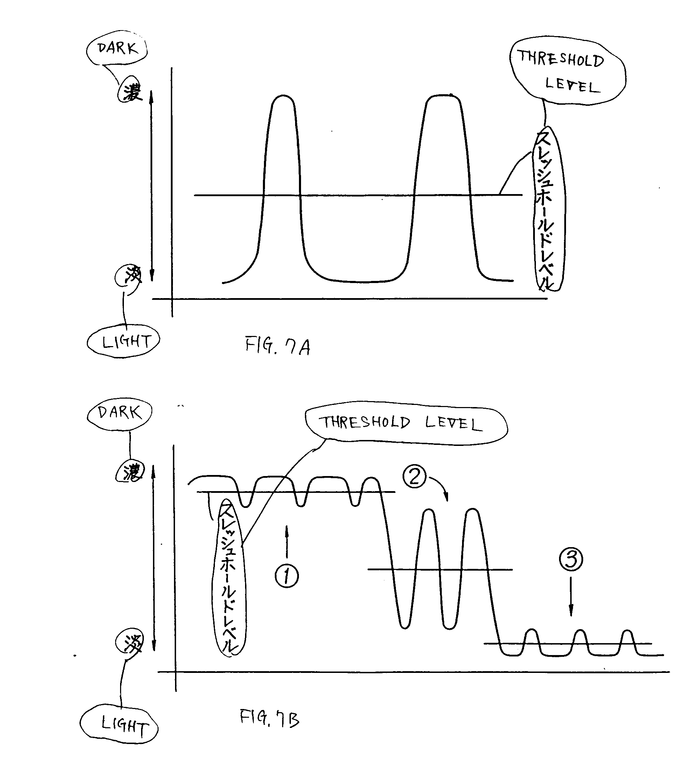

To begin with, a film is scanned by the scanner 1. FIG.5 is a flow chart for showing the processing procedures after the film is read in by the scanner 1. FIG.6A is a diagram showing a whole feature of the image information on the film scanned. Firstly, the image information is read (Step S11). Then, a feature point is determined (Step S12). In order to determine the feature point, several candidates for the feature point are selected, and a judgement is made on whether or not each candidate may satisfy the requirement for the feature point. Specifically, there is a possibility that a point in a character portion is selected as the feature point, but there is no possibility for a point in a halftoned portion. When there is not any possible feature point at all, a mark M such as a register etc., should be written in on the image information at the left-upper side as shown in FIG.6A. Next, the image information is divided in such a manner that each divided cell is to be a 1[mm] square image information (1 cell) (Step S13). As is shown in FIG.6C, an image information having a density of, for instance, 400DPI is formed of cells each having "256" picture elements (16 X 16 = 256). The reason why a cell is to be 1[mm] square is because the size is to be considered as to be optimum based upon the image resolution of the human's eye. After the division into 1[mm] square image information cells, every image information cell is, one by one, subjected to a judgement on whether or not the cell is formed of a halftoned region (Step S14). At this step, if the cell is judged as to be a character (text) region not a having halftoned region, a fixed threshold level is setup for binarizing (Step S15). On the other hand, if the cell is judged as to be a halftoned region, so called dynamic threshold level is set up (Step S16). Here, FIGs.6A and 6B are diagrams respectively showing the light and dark states of a character region and a halftoned region. As shown in FIG.7A, in the character region, the difference between the portion of character and the portion other than character appears clearly as a difference between light and dark. In contrast, in the case of the halftoned region, as shown in FIG.7B, some shifting occurs in the light and dark distribution, depending on the density of halftone dots. In detail, a halftone portion having a medium tone, as indicated at a portion ② in FIG.7B, tends to yield a relatively symmetrical difference between light and dark. However, in a halftone portion having a darker tone as indicated at a portion ① in FIG.7B, a relatively lighter portion still belongs to the dark portion according to the absolute light and dark evaluation. On the other hand, in a halftone portion having a lighter tone as indicated at a portion ③ in FIG.7B, a relatively darker portion still belongs to the light portion according to the absolute light and dark evaluation. Accordingly, if the threshold level for the character regions is fixed at the medium level, the binarizing operation is performed in consistence with the portions having characters and the other portion. However, if the threshold level for the halftoned portions is determined in the manner, a halftone portion having a darker tone is liable to be flat black, not detailing light tone portions, and by contrast, a halftone portion having a lighter tone exhibits a tendency to be flat white. As a result, even when a printing unsharpness occurs in such portions, the change in light and dark levels caused by the unsharpness is relatively small, therefore if the threshold level for the halftoned portions is to be set up as the same manner with that for the character portion, the image is disadvantageously expressed only with a flat black or with a flat white, without any tone variation. To deal with the problem, so called dynamic threshold level is adopted in this invention to be set up for the halftoned region. To perform this simply, there is a method by which components of the low image frequency are cut. This method is effective to process the unevenness caused by the scanner, or when the maximum and the minimum values of light and dark levels do not match. However, only this cannot solve the problem of the printing unsharpness to be cut. Therefore, the following procedures will be performed.

As shown in FIG.7B, in accordance with the density of the halftone dot, the darker halftone a portion has, at the darker level the threshold level is set up, and the lighter halftone a portion has, at the lighter level the threshold level is set up. As is described above, when the threshold level is adopted dynamically for the halftoned regions, any halftone dots having any density can be binarized on the basis of the relative difference between the light and the dark, so that the light and dark variations in an image portion having a printing unsharpness can be processed by such the binarizing operation. After the setting-up of the threshold level for each cell in respective manners depending on the character region or the halftoned region, the number of black and white picture elements being binarized is counted for every cell (Step S17).

Finally, the counted information is stored with the image information (Step S18). These steps are the procedures to be performed when the film is read in by the scanner 1.

Secondary, the PS plate is scanned by the scanner 1 to be compared with the film. When the PS plate is read in by the scanner 1, the read-in information usually deviates relatively from the information on the film. FIG.6B is a diagram showing an image information on the PS plate scanned. The image information on the PS plate image is inclined or leans at an angle on the storing area relatively against the image information on the film shown in FIG.6A. Accordingly, it becomes necessary to perform an alignment in the positions of images as a preprocessing of comparison of the image information on the film with the image information on the PS plate. In this invention, the processing for the alignment in position is carried out by a method to which an Affine transformation is applied, and by another further developed method to which the address conversion is applied. Hereinafter, all the cases willbe detailed respectively.

FIG.8 is a flow chart showing the processing procedure for the alignment in position by Affine transformation. Here, at first, a certain region is read out (Step S21). Then, a judgement is made whether there exists in the read region a feature point which corresponds to the feature point determined for the aforementioned information on the film (Step S22). If there exists the feature point, the feature point is to be determined as a reference point on which the recognition of a positional shift is based (Step S23). On the other hand, in the case of the absence of a feature point, there is to be determined the former shift quantity based on the information on the certain region which has been most lately read out (Step S24). In this way, the positional shift quantity is recognized by the sequential search from a starting point most likely to fit (Step S25). Then, the alignment in position is effected in accordance with the recognized positional shift quantity (Step S26). A positional shift can be considered as a rotational quantity, so that Affine transformation is used for the method of the alignment in position. In this case, the information stored in the memory is in practice subjected to the transformation to be aligned in position. It should be noted that the Affine transformation can be performed at a high speed, if, before the Affine transformation, a run-length transformation is carried out to compress the information from one-tenth to one-twentieth. In the case where the rotational quantity of the positional shift is small, it is possible to use the simple image transformation for the Affine transformation. After the alignment in position of the image information is completed as such, the image is divided in the same manner as having been performed for the film (Step S27). The divided cells are one by one subjected to the processes from the Steps S28 to S32. That is, each cell is binarized on the basis of the threshold level determined in respect to the cell on the film corresponding to the cell in question (Step S28). Then, the numbers of the black and white picture elements are counted for every cell (Step S29). The counted numbersof the black and white picture elements are compared with those of the corresponding cell on the film (Step S30). A judgement is made whether there is a difference more than a certain number between the numbers of the black and white picture elements on the PS plate and the numbers of the black and white picture elements on the film (Step S31). If there is a difference more than the certain number, the cell is set up as an error information (Step S32). Here, the most predominant method for judging whether a pair of images are matched or not, is the one in which an exclusive-OR is operated between the pair of images with respect to every picture element information to determine them unmatched if there are different points more than a certain number. However, the method has unnecessarily a high sensitivity, and further necessitates an enormous memory capacity to disadvantageously exhibit an economical infeasibility. In this reason, this invention adopts the method of comparing only the numbers of the black and white picture elements. According to the method based on the comparison of the numbers of picture elements, since the comparison is made in a range where the human's eye shows a high response, a high detecting capacity can be obtained without requiring a high precision in position alignment fitting. Thus every cell in the certain region read out at the Step S21, is compared one by one (Step S33). After the all part of the certain region read out is completed to be compared, then the same procedures are repeated from the Step S21 by reading in the next certain region. When the full frame region of the PS plate is finished to be compared, all the operation is completed (Step S34). These are the processing procedures for the case where the Affine transformation is applied.

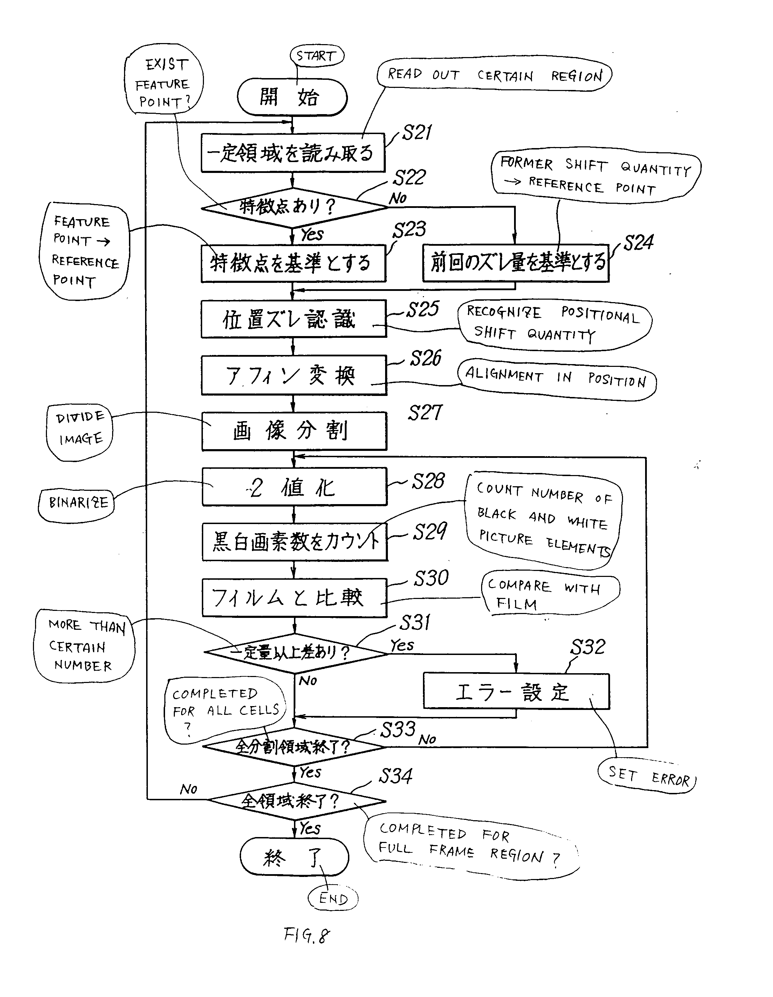

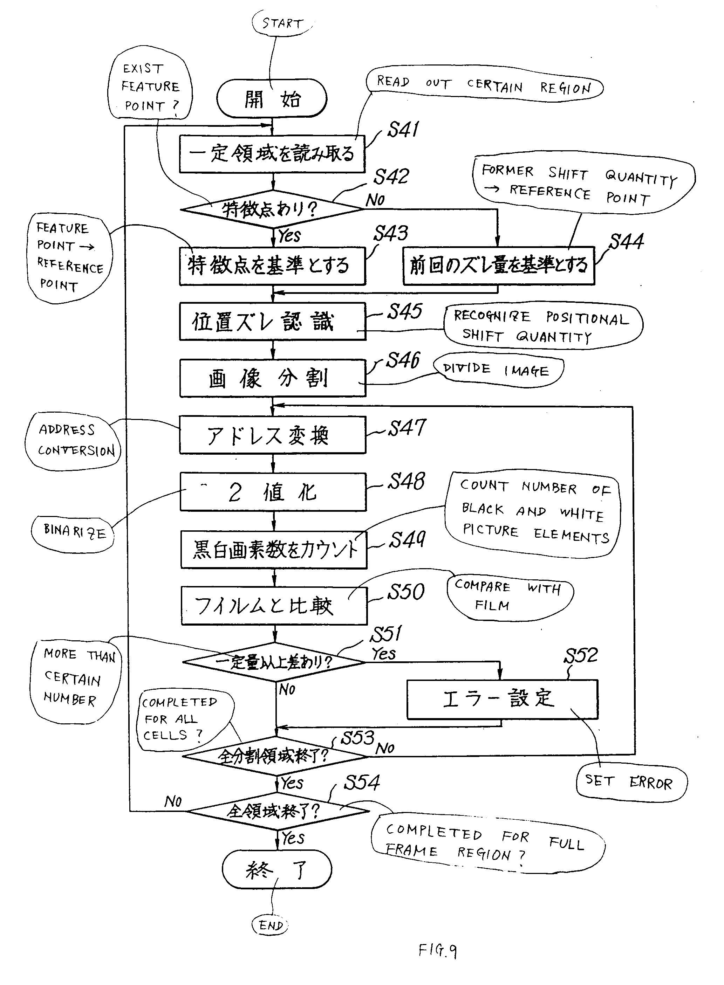

Next, there will be made an explanation on the case in which an address conversion is applied. FIG.9 shows the orders in the processing. Since the methods of recognizing the positional shift and comparing the number of the picture elements are applied in the same manner as above, an explanation will be made only on the portion related to the address conversion. At first, on the basis of the information on the recognized positional shift, what address on the memory storing the information on the PS plate corresponds to an arbitrary cell on the film is to be figured out (Step S47). In other words, as is shown in FIG.10, suppose that the address information on a cell on the film at the uppermost left hand side is to be (100, 100), the address information (100, 100) is address-transformed on the basis of the information of the positional shift, to determine the address information on the corresponding cell on the PS plate at the uppermost left hand side to be (120, 90). As this way, the address transformation method is performed in the manner in which without rotating the image information in practice, the address on the memory into which the corresponding image information should be held is calculated or figured out on the basis of the information on the positional shift.

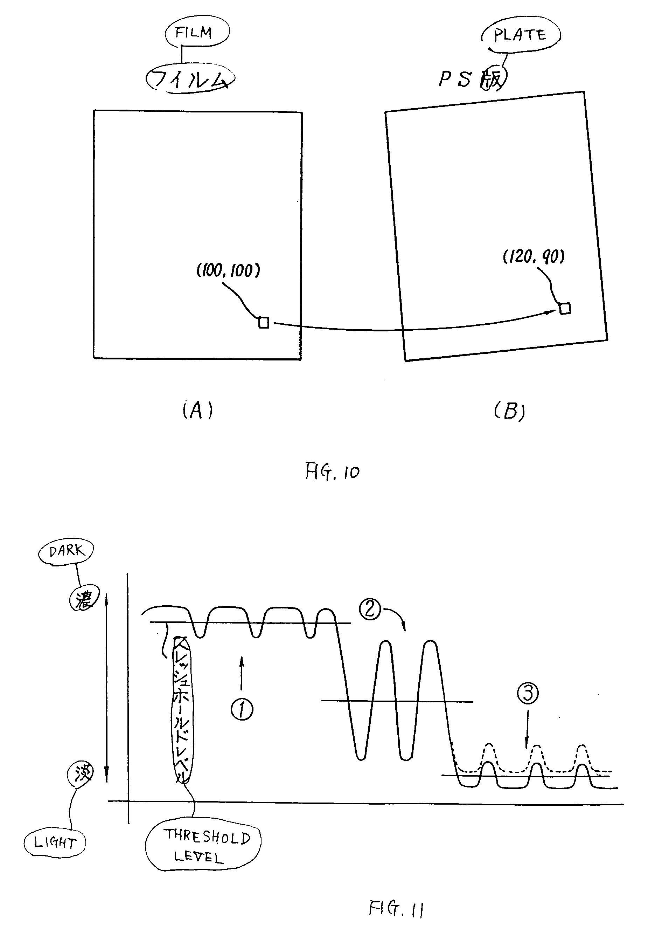

Now, according to the method of this invention in which the threshold level is varied dynamically, it is possible to properly detect printing unsharpness in the halftone dot region containing variations of the light and dark areas. A diagram for explaining the specific example is shown in FIG.11, in which there is assumed that a printing unsharpness occurs in a portion ③. Here, the light and dark states of the information on the film are shown by the solid line, and the threshold level is set up as shown in the same figure. On the other hand, with respect to the PS plate, however, the light and dark states of the information have a tendency to be shifted toward the darker direction under the influence of the printing unsharpness. This feature is shown in FIG.11 by the broken line. If the light and dark informations indicated by this broken line are binarized referring to the threshold level is advance set up, all the information is to be represented with flat black. Accordingly, the numbers of the black and white picture elements in the case becomes much different from those of the binarized information on the film, so that it is possible to clearly recognize the occurrence of printing unsharpness from the above portion.

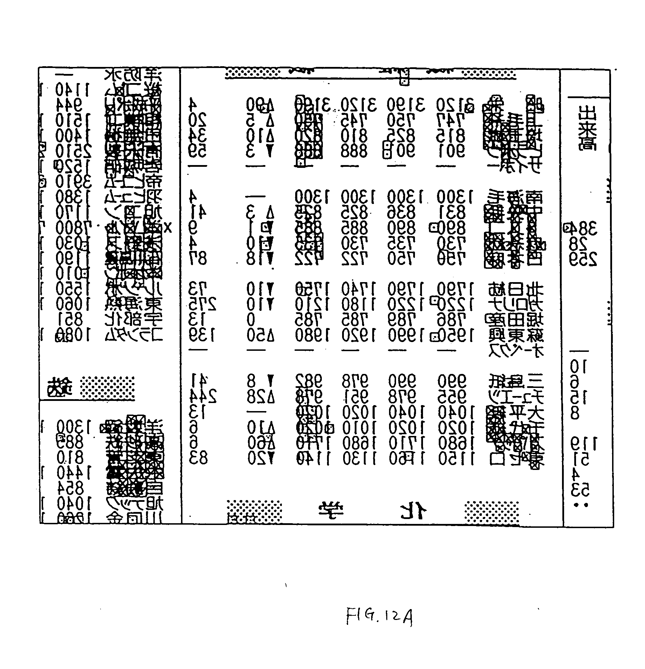

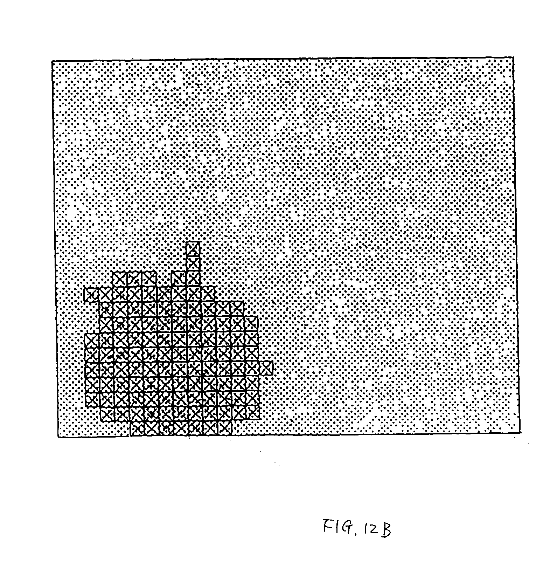

In order to enable one to easily recognize the portions of printing unsharpness, it may be possible to display them by a display unit or, print them out by means of a printer, with the error information set up at the Step S32 or the Step S52. FIGs.12A and 12B are diagrams showing examples of the cells detected as errors with "X" marks. In these figures, it is understood that the displays clearly agree with the printing unsharpness.

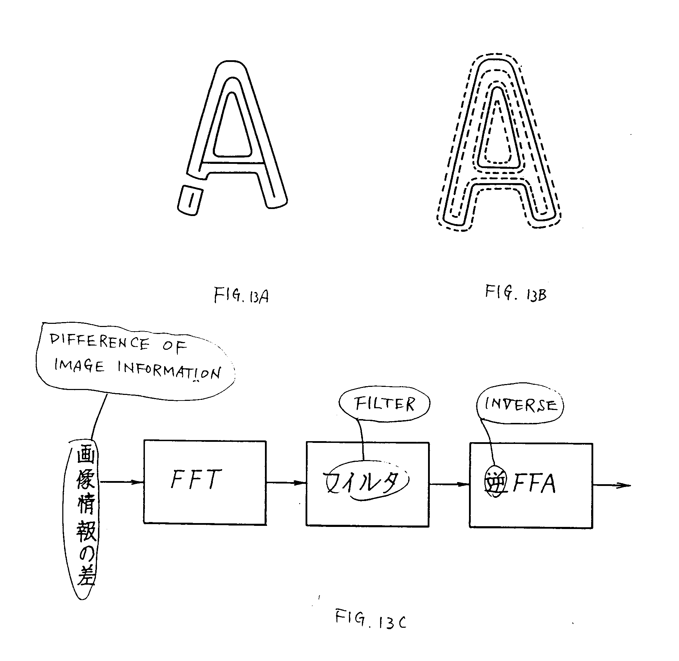

Other methods for detecting defects of printing images are shown in FIGs.13A to 13C. FIG.13A shows a method of distinguishing a brakes of lines and the like by subjecting a character to the fine-line drawing treatment to recognize the feature of the connection. FIG.13B shows a method of recognizing character defects by generating information in which a character image is thickened uniformly as well as is thinned. FIG.13C shows a method of removing the portion having the image frequency which does not affect on the recognition of the human's eye, by subjecting the difference of image information to a fast Fourier transform and inserting a filter.

As detailed above, according to the method of inspecting a plate of this invention, it is possible to detect defections such as printing unsharpness and the like on a PS plate. Particularly, in the halftone dot regions, since the image information is binarized by setting up so called a dynamically varying threshold level in accordance with the variations of the halftone density, it is possible to detect printing unsharpness properly regardless of the halftone having any halftone density. Further, since the positional shift which occurs when image information is read in by the scanning unit, is corrected using a method of the address conversion, it is possible to achieve the processing at a high speed and reduce the cost of hardware. Moreover, when a pair of image information binarized are compared each other, the numbers of the black and white picture elements are applied to be compared in place of the operation of an exclusive-OR used in general, therefore, the comparison can be performed in such a manner as to be well suited to the recognition characteristic of the human's eye.

It should be understood that many modifications and adaptations of the invention will become apparent to those skilled in the art and it is intended to encompass such obvious modifications and changes in the scope of the claims appended hereto.

**Claims**

1. A method for detecting inferior quality of image information which comprises the steps of respectively dividing an original image information and a reproduced image information formed due to said original image information into a plurality of regions in accordance with a characteristics of human's sensation when said original image information and said reproduced image information are compared each other, performing said comparison for said respective regions and detecting matching or non-matching between said respective regions.

2. A method for detecting inferior quality of image information according to Claim 1 further including the steps of judging a halftone image region or a character/line drawing region for said respective regions and performing said comparison due to said judged result.

3. A method for detecting inferior quality of image information according to Claim 2, wherein said respective regions are binarized with a fixed threshold when said judgement is the character/line drawing region and are binarized with a threshold corresponding to light and dark of the halftone when said judgement is the halftone region.

4. A method for detecting inferior quality of image information according to Claim 3 including the steps of counting picture elements of black or white for said binarized image information and detecting the non-matching when a difference more than a predetermined value occurs.

5. A method for detecting inferior quality of image information according to Claim 1 further including the steps of reading out said original image information and said reproduced image information by a scanner, setting a feature point, aligning in position by recognizing a positional shift between said original image information and said reproduced image information and then performing said division.

6. A method for detecting inferior quality of image information according to Claim 5, wherein said alignment in position is performed by a method of address conversion.

7. A method for detecting inferior quality of image information according to Claim 1, wherein said original image information is an information on a printed matter.

8. A method for detecting inferior quality of image information according to Claim 1, wherein said original image information is an information on a pattern of a printed circuit board.

9. A method for detecting inferior quality of image information according to Claim 1, wherein said original image information is an information on a pattern of a shadow mask.

10. A method for plate inspection which comprises the steps of: reading by means of a reading unit both of an original film and a printing plate which is prepared by performing an exposure and development on the basis of the original film; aligning the film in position to the plate by setting up feature points to recognize a positional shift between the former image information and the latter one; dividing the aforementioned image information into a plurality of regions to distinguish whether each of the divided regions is formed of halftone image, or characters and line drawings, and when an image is determined to be made of a character and line drawing region, binarizing the image region at a fixed threshold level, while in the case of a halftone image region, binarizing the image region at threshold levels in accordance with respective densities of halftone dots; and comparing the film with the plate on the above mentioned image information one by one for the divided regions to detect disagreement therebetween.

11. A method for plate inspection as claimed in Claim 10, wherein said alignment in position is performed by means of the address conversion.

12. A method for plate inspection as claimed in Claim 10, wherein there is detected disagreement between said pair of image information binarized when the difference in the numbers of black and white picture elements, which are counted for each information, reaches more than a certain numbers.

FIG.1 PRIOR ART

FIG.3

FIG.4

START

READ IMAGE INFORMATION

開 始

画像情報の読み取り — S11

DETERMINE FEATURE POINT

特 徴 点 の 決 定 — S12

DIVIDE IMAGE

画 像 分 割 — S13

HALFTONE?

DYNAMIC THRESHOLD LEVEL

網 点 か? — S14   Yes

No

FIXED THRESHOLD LEVEL

固定スレッシュホールドレベル — S15

ダイナミック スレッシュホールドレベル — S16

黒白画素数をカウント — S17

COUNT NUMBER OF BLACK AND WHITE PICTURE ELEMENTS

格 納 — S18

STORE COUNTED INFORMATION

終 了

END

FIG. 5

FILM

フィルム

M

a

FIG. 6A

PLATE

P S 版

FIG. 6B

1mm
(16)

1mm
(16)

FIG. 6C

FIG. 7A

FIG. 7B

START

EXIST FEATURE POINT?

READ OUT CERTAIN REGION

開 始

一定領域を読み取る  — S21

S22

特徴点あり?  No

FORMER SHIFT QUANTITY → REFERENCE POINT

FEATURE POINT → REFERENCE POINT

Yes  S23

特徴点を基準とする

前回のズレ量を基準とする  S24

位 置 ズレ 認 識  — S25

RECOGNIZE POSITIONAL SHIFT QUANTITY

ア フ ィ ン 変 換  — S26

ALIGNMENT IN POSITION

DIVIDE IMAGE

画 像 分 割  S27

BINARIZE

2 値 化  ~ S28

COUNT NUMBER OF BLACK AND WHITE PICTURE ELEMENTS

黒白画素数をカウント  ~ S29

フィルムと比較  — S30

COMPARE WITH FILM

MORE THAN CERTAIN NUMBER

S31

一定量以上差あり?  Yes

S32

No

COMPLETED FOR ALL CELLS ?

エ ラ ー 設 定

全分割領域終了?  S33  No

SET ERROR

No  全領域終了?  S34

Yes

COMPLETED FOR FULL FRAME REGION?

終  了

END

FIG. 8

16

START

EXIST FEATURE POINT?

開　始　　READ OUT CERTAIN REGION

一定領域を読み取る　S41

特徴点あり？　S42　No

FORMER SHIFT QUANTITY → REFERENCE POINT

Yes

FEATURE POINT → REFERENCE POINT

特徴点を基準とする　S43　　前回のズレ量を基準とする　S44

位置ズレ認識　S45　RECOGNIZE POSITIONAL SHIFT QUANTITY

画像分割　S46　DIVIDE IMAGE

ADDRESS CONVERSION

アドレス変換　S47

２値化　S48　COUNT NUMBER OF BLACK AND WHITE PICTURE ELEMENTS

BINARIZE

黒白画素数をカウント　S49

フィルムと比較　S50　COMPARE WITH FILM

MORE THAN CERTAIN NUMBER

一定量以上差あり？　S51　Yes

エラー設定　S52

COMPLETED FOR ALL CELLS?

全分割領域終了？　S53　No

SET ERROR

Yes　S54

No　全領域終了？

COMPLETED FOR FULL FRAME REGION?

Yes

終　了

END

FIG.9

17

FILM
フィルム

PLATE
PS版

(100, 100)

(120, 90)

(A)

(B)

FIG. 10

DARK
濃

①

②

③

スレッシュホールドレベル

淡

LIGHT

THRESHOLD
LEVEL

FIG. 11

FIG. 12B

FIG. 13A

FIG. 13B

FIG. 13C